# FASCICULE DE BREVET EUROPEEN

(11) **EP 4 415 992 B1**
(45) Date de publication et mention de la délivrance du brevet: **10.09.2025**
(21) Numéro de dépôt: 22797722.0
(22) Date de dépôt: 28.09.2022
(51) Int. Cl.: B60G 17/02, F16F 1/12, B60G 15/06

(54) **DISPOSITIF DE RÉGLAGE DE LA RAIDEUR D'UN RESSORT DE SUSPENSION**
VORRICHTUNG ZUR EINSTELLUNG DER STEIFIGKEIT EINER FEDERAUFHÄNGUNG
DEVICE FOR ADJUSTING THE STIFFNESS OF A SUSPENSION SPRING

(30) Priorité: 13.10.2021 FR 2110840
(43) Date de publication de la demande: 21.08.2024
(73) Titulaire: Renault s.a.s, 78084 Guyancourt Guyancourt (FR)
(72) Inventeur: LEFEBVRE, Bertrand, 91940 COURTABOEUF (FR); MATEOS, Laurent, 91940 COURTABOEUF (FR)
(86) Numéro de dépôt international: PCT/EP2022/077068
(87) Numéro de publication internationale: WO 2023/061760

(56) Documents cités:
- FR-A1- 2 379 731
- US-A- 5 722 645
- US-B2- 8 029 002

## Description

### DOMAINE TECHNIQUE DE L'INVENTION

La présente invention concerne de manière générale la suspension et l'amortissement d'un quelconque véhicule automobile.

Elle concerne plus particulièrement un dispositif de réglage de la raideur d'une suspension d'un véhicule automobile, comportant :
- une douille de blocage qui délimite une rainure hélicoïdale de réception d'une extrémité d'un ressort de la suspension, et
- une bague de réglage montée mobile en rotation par rapport à la douille de blocage autour d'un axe principal.

Elle concerne également un système de suspension et d'amortissement d'un véhicule automobile, comportant un dispositif de réglage tel que précité.

L'invention trouve une application particulièrement avantageuse dans les voitures, motos, cars et camions.

### ETAT DE LA TECHNIQUE

Une voiture est toujours équipée, au niveau de chacune de ses roues, d'un système de suspension et d'amortissement.

La partie suspension est généralement formée par un ressort hélicoïdal fonctionnant en compression, tandis que l'amortissement est formé par un vérin.

Le ressort hélicoïdal de suspension est choisi en fonction de sa raideur, et ce choix résulte d'un compromis entre tenue de route (nécessitant une raideur élevée) et confort (nécessitant une raideur réduite).

Afin de se libérer en partie de ce compromis, il est connu d'équiper une suspension d'un dispositif de réglage permettant d'ajuster la raideur du ressort hélicoïdal en fonction des besoins de l'usager (par exemple s'il souhaite utiliser son véhicule sur route ou sur circuit). Un tel dispositif de réglage est par exemple décrit dans le document US8029002. La solution qui y est présentée propose d'interposer un ressort de suspension entre, d'un côté inférieur, une douille réglable en hauteur, et, du côté supérieur, une coupelle portée par un vérin d'amortissement. La douille réglable est en pratique logée dans un réceptacle de telle sorte qu'elle peut coulisser dans ce dernier de haut en bas. Lorsque la douille est en position haute, le ressort est utilisé sur toute sa longueur et se trouve précontraint entre cette douille et la coupelle. En revanche, grâce à la forme particulière du ressort, lorsque la douille est en position basse, le ressort ne s'appuie plus contre la douille mais directement contre le réceptacle, si bien que seule une partie de sa longueur est utilisée. Ce dispositif permet donc de modifier la raideur de la suspension.

L'inconvénient de ce dispositif est son encombrement puisqu'il nécessite d'utiliser une douille de réglage et un réceptacle autour de cette douille.

Le document US5722645, qui divulgue le préambule de la revendication 1, et le document FR2379731 montrent des dispositifs de réglage de la raideur d'une suspension d'un véhicule.

### PRESENTATION DE L'INVENTION

Afin de remédier à l'inconvénient précité de l'état de la technique, la présente invention propose un dispositif de réglage tel que défini en introduction, dans lequel la bague de réglage comporte un doigt qui débouche dans la rainure hélicoïdale et qui est adapté à former une butée pour l'extrémité du ressort de suspension, et dans lequel il est prévu des moyens de verrouillage de la mobilité de rotation de la bague de réglage par rapport à la douille de blocage.

Ainsi, grâce à l'invention, la rotation de la douille de blocage par rapport à la bague de réglage permet de déplacer le doigt le long de la rainure hélicoïdale. De ce fait, la longueur de spire du ressort de suspension qui est engagée dans la rainure peut varier, ce qui permet de modifier la longueur utile du ressort de suspension (celle située en dehors de la rainure) et donc la raideur de la suspension.

Cette solution s'avère peu encombrante, robuste, simple à fabriquer et peu onéreuse.

D'autres caractéristiques avantageuses et non limitatives du dispositif de réglage conforme à l'invention, prises individuellement ou selon toutes les combinaisons techniquement possibles, sont les suivantes :
- la bague de réglage comporte un plateau sur lequel repose une face d'appui de la douille de blocage ;
- le doigt s'élève à partir du plateau ;
- la rainure hélicoïdale présente, sur une partie au moins de sa longueur, une fente qui débouche sur ladite face d'appui et qui est traversée par le doigt ;
- les moyens de verrouillage sont adaptés à verrouiller la bague de réglage dans un nombre fini de positions angulaires par rapport à la douille de blocage ;
- ledit nombre fini est compris entre deux et quatre, bornes incluses ;
- il est prévu dans la douille de blocage au moins un trou d'insertion adapté à recevoir un levier de manoeuvre de la bague de réglage par rapport à la douille de blocage ;
- les moyens de verrouillage sont formés par une excroissance qui fait saillie dudit plateau ou respectivement de ladite face d'appui et qui est adaptée à s'engager dans l'une ou l'autre de plusieurs cavités située en creux dans ladite face d'appui ou respectivement dans ledit plateau ;
- la bague de réglage présente une face intérieure qui est taraudée et adaptée à être vissée sur un vérin ;
- la bague de réglage est montée coulissante sur un vérin et il est prévu un écrou vissé sur le vérin, à l'opposé du ressort par rapport à la bague de réglage ;
- il est prévu un contre-écrou qui est adapté à être vissé sur le vérin, à l'opposé du ressort par rapport à la bague de réglage.

L'invention concerne aussi un système de suspension et d'amortissement d'un véhicule automobile, comportant :
- un vérin qui comprend un cylindre, un piston et une tige de vérin qui est reliée au piston et qui fait saillie hors du cylindre,
- un ressort enfilé sur le vérin, et
- un dispositif de réglage tel que précité, placé à une extrémité dudit ressort.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'une partie d'un système de suspension et d'amortissement comprenant un dispositif de réglage conforme à l'invention ;
[Fig. 2] est une vue de côté de la bague de réglage du dispositif de réglage de la figure 1 ;
[Fig. 3] est une vue de côté de la douille de blocage du dispositif de réglage de la figure 1 ;
[Fig. 4] est une vue en coupe longitudinale de la douille de blocage de la figure 3 ;
[Fig. 5] est une vue schématique en perspective d'une variante de réalisation du dispositif de réglage de la figure 1, dans une première configuration ;
[Fig. 6] est une vue schématique du dispositif de réglage de la figure 5, dans une seconde configuration.

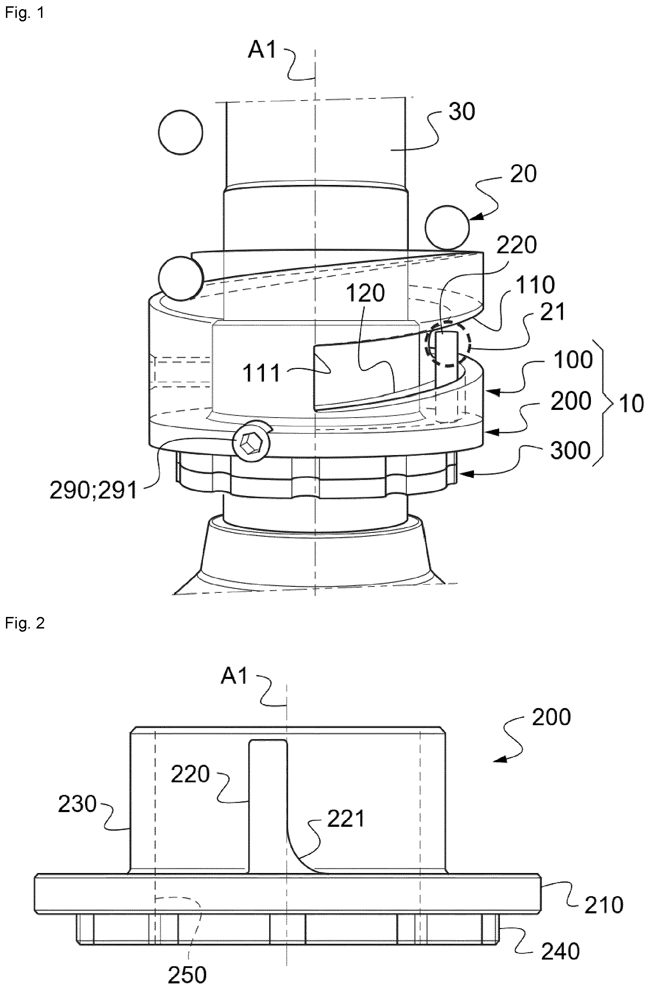

Sur la figure 1, on a représenté une partie d'un système de suspension et d'amortissement pour véhicule automobile.

De manière classique, la partie d'amortissement de ce système comporte un vérin 30 qui comprend un cylindre, un piston (non visible) adapté à coulisser à l'intérieur du cylindre, et une tige de vérin (non représenté) qui est reliée au piston et dont une partie fait saillie hors du cylindre.

La partie suspension du système comporte pour sa part un ressort hélicoïdal 20 à plusieurs spires.

Ce ressort pourrait présenter diverses formes, avec notamment un diamètre et un pas variables. On considérera toutefois ici que son diamètre est constant sur toute sa longueur et que la distance entre deux spires (le pas) est également constante, notamment à proximité de l'extrémité basse de ce ressort hélicoïdal 20.

A ce sujet, pour la clarté de l'exposé, on considérera ici que le système de suspension et d'amortissement est orienté tel qu'il est représenté sur la figure 1, avec son vérin 30 qui s'étend verticalement et la tige du vérin qui fait saillie du cylindre du vérin vers le haut. Le terme « inférieur » sera donc employé pour désigner le côté d'un élément tourné vers la route, alors que le terme « supérieur » sera employé pour désigner le côté opposé.

Le ressort de suspension 20 est enfilé sur le vérin 30, si bien qu'il s'étend selon le même axe que celui-ci. Cet axe sera ci-après appelé « axe principal A1 ».

Il s'interpose entre, du côté supérieur, une coupelle (non visible) fixée à la tige du vérin et, du côté inférieur, un dispositif de réglage 10 qui fait plus précisément ici l'objet de la présente invention et qui est solidarisé au cylindre du vérin 30.

Ce dispositif de réglage 10 est prévu pour permettre de faire varier manuellement la raideur de la suspension.

Il comporte à cet effet au moins deux parties distinctes, à savoir une douille de blocage 100 qui reçoit et loge l'extrémité inférieure 21 du ressort 20, et une bague de réglage 200 qui est montée mobile en rotation par rapport à la douille de blocage 100 de telle sorte qu'elle peut faire varier la longueur de ressort logé dans la douille de blocage 100.

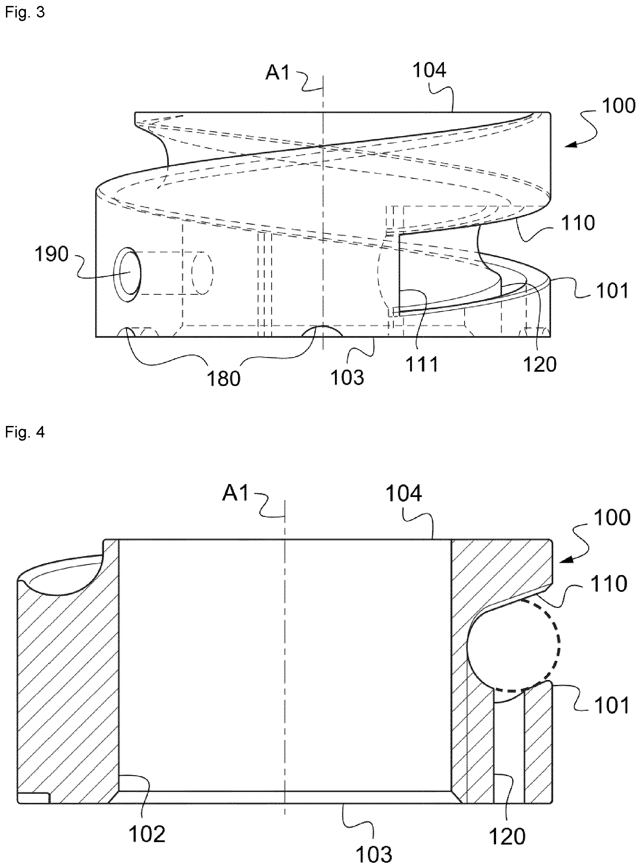

La douille de blocage 100 est représentée en transparence sur la figure 1, pour faciliter la compréhension de l'invention. Elle est plus précisément représentée sur les figures 3 et 4. Elle comporte un corps tubulaire 101 qui présente des faces inférieure 103 et supérieure 104 planes et orthogonales à l'axe principal A1. La face intérieure 102 de ce corps tubulaire 101 est cylindrique de révolution autour de l'axe principal A1. Sa face extérieure est quant à elle sensiblement cylindrique de révolution autour de l'axe principal A1, à ceci près qu'elle est en partie creusée par une rainure hélicoïdale 110.

Le corps tubulaire 101 présente une épaisseur radiale (mesurée entre ses faces intérieure et extérieure) qui est de préférence supérieure au « diamètre de fil » du ressort 20.

Il présente une hauteur (mesurée selon l'axe principal A1) qui est de préférence supérieure à la hauteur d'une spire du ressort 20.

La rainure hélicoïdale 110 creusée dans le corps tubulaire 101 est prévue pour recevoir une partie de la spire inférieure de ce ressort 20.

Elle débouche à cet effet par l'une de ses extrémités sur la face supérieure 104 du corps tubulaire 101. Son autre extrémité est en revanche fermée par un fond 111, de sorte qu'elle ne débouche pas du côté de la face inférieure 103 du corps tubulaire 101.

La rainure hélicoïdale 110 s'étend en creux dans la face extérieure du corps tubulaire 101, si bien qu'elle débouche également vers l'extérieur du corps tubulaire 101. En variante, on pourrait prévoir que le corps tubulaire soit plus épais et que la rainure hélicoïdale soit entièrement « creusée » dans l'épaisseur de ce corps, si bien qu'elle ne serait pas accessible depuis l'extérieur. Cette variante n'est pas préférée du fait de son encombrement et du risque que la rainure hélicoïdale se remplisse de poussières et gravillons.

La rainure hélicoïdale 110 présente un pas égal à celui des spires du ressort 20. Elle présente en outre une section transversale en forme d'arc-de-cercle de diamètre égal, au jeu près, au diamètre de fil du ressort 20. De cette manière, l'extrémité inférieure 21 de ce ressort peut facilement coulisser dans cette rainure lorsque l'on fait pivoter le ressort 20 par rapport au corps tubulaire 101. Le jeu prévu est ici supérieur à 1% du diamètre de fil du ressort.

La section de cette rainure hélicoïdale 110 s'étend sur plus d'un demi-cercle, de sorte qu'elle forme une bonne assise pour le ressort 20.

Grâce à cette forme, le ressort 20 épouse bien la forme de la rainure hélicoïdale 110, si bien que les efforts se répartissent bien sur l'ensemble de la douille de blocage 100 lorsque le ressort est comprimé.

On peut préciser ici, et pour une raison qui se comprendra à la lecture de la suite de cet exposé, que le corps tubulaire 101 de la douille de blocage 100 présente une fente 120 qui s'étend depuis la face inférieure 103 du corps tubulaire 101 jusque dans la rainure hélicoïdale 110.

Cette fente 120 peut être qualifiée de droite en ce sens qu'elle s'étend verticalement depuis la rainure hélicoïdale 110 jusqu'à la face inférieure 103 du corps tubulaire 101. Elle peut aussi être qualifiée de recourbée en ce sens qu'elle s'étend dans le prolongement de la rainure hélicoïdale 110, sous celle-ci, sur un secteur angulaire déterminé.

Elle s'étend sur un secteur angulaire autour de l'axe principal A1 qui est strictement inférieur à 360 degrés, et qui est ici de l'ordre de 180 degrés.

La fente 120 présente une largeur (mesurée radialement par rapport à l'axe principal A1) qui est strictement inférieure au diamètre de fil du ressort 20 et qui est environ égal au tiers de ce diamètre.

Comme le montre la figure 3, la face inférieure 103 du corps tubulaire 101 est sensiblement plane afin de pouvoir s'appuyer directement sur la bague de réglage 200.

Cette bague de réglage 200 est plus précisément représentée sur la figure 2.

Elle comporte principalement un tube 230 cylindrique de révolution autour de l'axe principal A1, un plateau 210 qui borde le tube 230 le long de son extrémité inférieure, et un doigt 220 qui s'élève à partir du plateau 210, à distance du tube 230, parallèlement à l'axe principal A1.

Le tube 230 présente une face intérieure 250 qui est taraudée, si bien qu'il peut être vissé sur un filetage prévu sur une partie de la hauteur du cylindre du vérin 30.

Il présente un diamètre extérieur égal, au jeu près, au diamètre intérieur du corps tubulaire 101 de la douille de blocage 100.

Cette douille de blocage 100 est ainsi engagée sur ce tube 230, lequel permet de guider la douille en rotation autour de l'axe principal A1.

Le plateau 210 présente une face supérieure plane et orthogonale à l'axe principal A1 sur laquelle repose la face inférieure 103 du corps tubulaire 101 de la douille de blocage 100. Ainsi, ce plateau 210 sert de support pour la douille de blocage 100 lorsque le ressort est comprimé entre celle-ci et la coupelle.

Le plateau 210 présente un diamètre extérieur sensiblement égal à celui du corps tubulaire 101, de sorte que leurs faces externes s'étendent dans le prolongement l'une de l'autre. Par conséquent, l'encombrement du système reste réduit.

Le doigt 220 présente une section transversale (dans un plan orthogonal à l'axe principal A1) de forme sensiblement rectangulaire. Sa section est telle qu'il peut être engagé au travers de la fente 120.

Il s'étend en hauteur sur une longueur au moins égale à la moitié du pas du ressort 20. Cette longueur est telle que le doigt 220 débouche dans la rainure hélicoïdale 110. Comme le montre la figure 1, grâce à cette disposition, le doigt 220 forme une butée sur laquelle s'appuie l'extrémité inférieure 21 du ressort 20.

Pour solidifier la liaison entre le doigt 220 et le plateau 210, il est prévu une sorte de congé 221 à la jonction entre ces deux éléments, qui est situé du côté du doigt 220 sur lequel l'extrémité inférieure 21 du ressort 20 s'appuie.

Comme le montre la figure 1, lorsque la bague de réglage 200 pivote par rapport à la douille de blocage 100, le doigt 220 navigue le long de la rainure hélicoïdale 110. Les extrémités de la fente 120 forment alors des butées pour le doigt, qui limitent la course angulaire dont dispose le doigt à environ 180 degrés.

En faisant pivoter la bague de réglage dans le sens horaire (vu de dessus), le doigt 220 se rapproche du fond 111 de la rainure hélicoïdale 110, de sorte que le ressort 20 dispose de plus de longueur pour s'engager dans celle-ci.

Au contraire, en faisant pivoter la bague de réglage dans le sens anti-horaire (vu de dessus), le doigt 220 s'éloigne du fond 111 de la rainure hélicoïdale 110, de sorte que le ressort 20 dispose de moins de longueur pour s'engager dans celle-ci.

La longueur du ressort 20 qui est engagée dans la rainure hélicoïdale 110 peut être considérée comme inactive en ce sens qu'elle ne participe pas à la suspension du véhicule (sur cette longueur, le ressort ne peut pas se comprimer). Seule la longueur du ressort 20 qui est située en dehors de cette rainure sera active. Ainsi le déplacement du doigt 220 permet-il de faire varier la raideur de la suspension.

Lorsque le ressort 20 est contraint, les efforts de friction empêchent de faire facilement pivoter la bague de réglage 200 par rapport à la douille de blocage 100.

Alors, comme le montre la figure 3, le corps tubulaire 101 de la douille de blocage 100 comporte au moins un trou 190 qui s'étend radialement par rapport à l'axe principal A1 et dans lequel il est possible d'engager une tige. Cette tige peut alors servir de levier pour faire pivoter la douille de blocage 100 autour de l'axe principal A1.

On notera par ailleurs, en référence aux figures 1 et 2, que la bague de réglage 200 comporte une partie permettant de faciliter sa manoeuvre 240. Cette partie est formée par une rondelle 240 qui est située sous le plateau 210 et qui présente des encoches en creux dans son bord périphérique. Cette rondelle 240 permet alors de faire pivoter l'intégralité de la bague de réglage 200 avec une clé à ergot, pour la faire monter ou descendre le long du cylindre du vérin 30 (afin de régler la précontrainte du ressort 20).

En fonctionnement, si la mobilité en rotation de la bague de réglage 200 par rapport à la douille de blocage 100 était laissée libre, le ressort 20 risquerait de repousser le doigt 220 vers le fond 111 de la rainure hélicoïdale 110.

Pour éviter cela, il est prévu des moyens de verrouillage 290 de la mobilité en rotation de la bague de réglage 200 par rapport à la douille de blocage 100.

Ces moyens de verrouillage 290 sont conçus ici pour qu'on ne puisse verrouiller la bague de réglage 200 que dans un nombre fini de positions angulaires par rapport à la douille de blocage 100.

De préférence, ce nombre fini est compris entre deux et cinq, bornes incluses.

Dans le mode de réalisation représenté sur les figures 1 à 4, il est prévu que la bague de réglage 200 puisse prendre l'une ou l'autre de seulement trois positions angulaires par rapport à la douille de blocage 100.

Comme le montre bien la figure 1, ces moyens de verrouillage 290 comportent à cet effet une vis qui est vissée radialement dans un alésage taraudé prévu dans le bord périphérique du plateau 210 de la bague de réglage 200. Cette vis comporte une tête 291 qui, lorsque la vis est vissée dans l'alésage taraudé, se loge dans une échancrure prévue dans le plateau. Cette tête 291 présente une empreinte, ici hexagonale, pour faciliter son vissage. Elle présente un diamètre supérieur à l'épaisseur du plateau 210, si bien qu'elle déborde à l'avant et à l'arrière de ce plateau.

La douille de blocage 100 présente en correspondance trois encoches 180 (voir figure 3) en creux dans sa face inférieure 103, dans chacune desquelles la tête 291 de la vis peut venir se loger.

Ces encoches 180 présentent des formes d'arcs : ils sont circonscrits à un cylindre de diamètre environ égal à celui de la tête de la vis et s'étendent sur moins de 180 degrés. Ici, ces encoches 180 sont écartées angulairement les unes des autres d'environ 80 ou 90 degrés autour de l'axe principal A1.

Ainsi, lorsque l'usager souhaite modifier la position angulaire de la bague de réglage 200 par rapport à la douille de blocage 100, il peut dévisser en partie la vis, faire pivoter ces deux pièces l'une par rapport à l'autre jusqu'à ce que la tête 291 de la vis se retrouve en regard d'une encoche 180, puis revisser la vis.

Toutefois, s'il s'aide d'un bras de levier, il n'est pas nécessaire qu'il dévisse la vis : il peut en effet forcer la bague de réglage 200 à pivoter par rapport à la douille de blocage 100. On comprend alors qu'en variante, la vis pourrait être remplacée par un simple bombement venant de formation avec la bague de réglage 200 et s'étendant en saillie du plateau. Selon une autre variante, ce bombement pourrait être prévu sur le corps tubulaire 101 et les encoches (180) pourraient être réalisées en creux dans le plateau 210.

Comme cela a été exposé supra, le tube 230 de la bague de réglage 200 est vissé sur le cylindre du vérin 30. Il est ainsi possible, en le faisant pivoter par exemple d'un tour complet, de modifier la précontrainte de la suspension.

On notera ainsi que dans le mode de réalisation illustré sur les figures 1 à 4, le réglage de la raideur du ressort 20 se fait en faisant pivoter la douille de blocage 100 autour du cylindre du vérin 30, sans modifier la position angulaire de la bague de réglage 200, ce qui permet d'agir uniquement sur la raideur de la suspension mais pas sur sa précontrainte ni sur la hauteur de caisse du véhicule. Ainsi, les réglages sont bien dissociés.

Pour éviter qu'à l'usage, la bague de réglage 200 ne se dévisse, il est ici prévu un contre-écrou 300 vissé sur le cylindre du vérin 30, sous la bague de réglage 200. Ici, ce contre-écrou présente une forme identique à celle de la rondelle 240 de la bague de réglage 200. Il peut donc être serré à l'aide de la même clé à ergot.

On notera que la bague de réglage 200 est ici réalisée d'une seule pièce en matière métallique, ici en aluminium (afin de limiter son poids).

La douille de blocage 100 est quant à elle réalisée dans une matière plus tendre que la bague de réglage 200, à savoir ici en matière plastique. Elle pourrait être réalisée d'une seule pièce en matière plastique chargée en fibres ou dans une matière plastique suffisamment rigide, telle que l'Ertalon^{®}.

La présente invention n'est nullement limitée au mode de réalisation décrit et représenté, mais l'homme du métier saura y apporter toute variante conforme à l'invention.

On pourrait ainsi par exemple prévoir que la douille de blocage 100 ne s'appuie pas directement sur la bague de réglage 200, mais qu'un élément tel qu'une rondelle soit interposé entre eux.

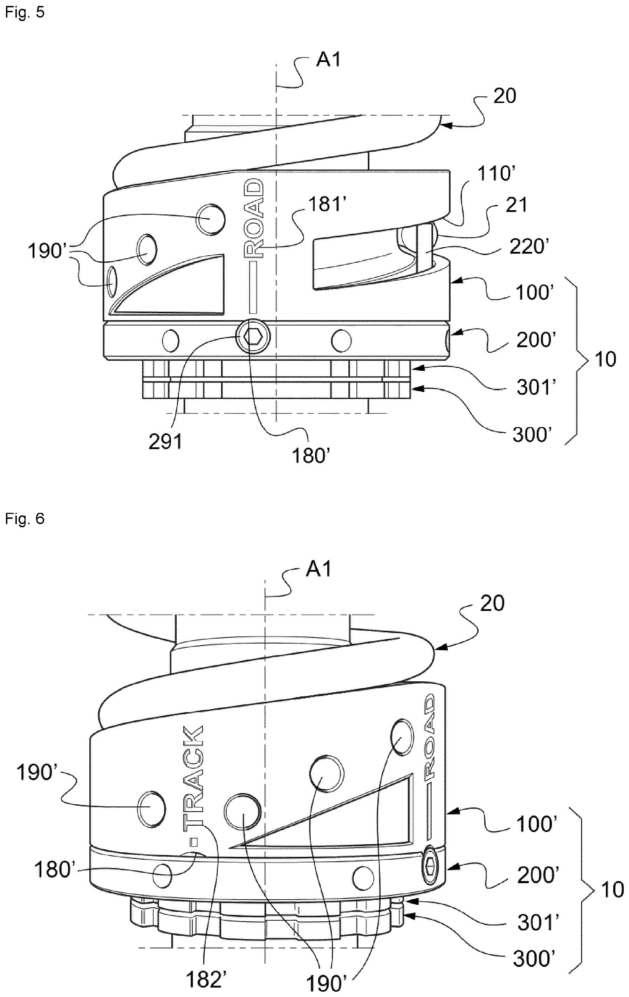

Sur les figures 5 et 6, on a représenté une variante de réalisation du dispositif de réglage 10.

Cette variante est homologue du mode de réalisation décrit en référence aux figures 1 à 4, en ce sens que dans cette variante, le dispositif comporte ici encore une douille de blocage 100' qui délimite une rainure hélicoïdale 110', et une bague de réglage 200' qui comporte un doigt 220' engagé dans la rainure hélicoïdale 110' et qui est monté pivotant par rapport à la douille de blocage 100'.

La principale différence est que dans cette variante, la bague de réglage 200' est montée coulissante sur le cylindre de vérin. Elle est donc dépourvue de taraudage intérieur. De ce fait, la rotation de cette bague n'entraîne pas une modification de la précontrainte du ressort 20 (et de la hauteur de caisse du véhicule).

Afin de pouvoir régler cette précontrainte, le dispositif de réglage 10 comporte un écrou 301' qui est positionné sous cette bague de réglage 200'. Pour les mêmes raisons que précité, il est également prévu un contre-écrou 300' sous cet écrou 301'. Ici cet écrou et ce contre-écrou sont identiques.

Une seconde différence est qu'il est prévu uniquement deux encoches 180' dans la douille de blocage 100', si bien que cette dernière peut présenter uniquement deux positions angulaires stables par rapport à la bague de réglage 200' (ici écartées d'environ 80 degrés). Ce nombre restreint de positions angulaires permet d'éviter que l'usager ne se trompe dans le réglage des différents dispositifs de réglage 10 équipant son véhicule : il serait en effet dangereux que l'un des quatre dispositifs de réglage 10 équipant son véhicule soit réglé différemment des autres.

Dans le même objectif d'éviter toute erreur de réglage, il est ici en outre prévu que le dispositif de réglage 10 comporte des marquages 181', 182' indiquant dans quelle configuration il se trouve.

Il est ainsi prévu un marquage 181' « route » (ou « road » en anglais) en regard de l'une des encoches 180', et un marquage 182' « piste » (ou « track » en anglais) en regard de l'autre des encoches '180'. De manière préférentielle, ces marquages présentent des couleurs différentes.

De cette manière, l'usager peut vérifier rapidement dans quelle configuration se trouve le dispositif de réglage 10, en regardant devant quel marquage se trouve la tête 291 de vis.

De manière aussi préférentielle, un seul de ces marquages 181', 182' (celui au niveau duquel se trouve la tête 291 de vis) est visible depuis l'extérieur du véhicule, lorsque ce dernier est assemblé. Ainsi est-il possible, lorsque le véhicule est prêt à partir, de vérifier que les dispositifs de réglage 10 sont tous dans la même configuration.

De façon avantageuse, le pivotement de la douille de blocage 100' par rapport à la bague de réglage 200' n'est possible qu'en enlevant la roue correspondante du véhicule, de manière que le changement de configuration du dispositif de réglage 10 est vu comme un acte important affectant la stabilité du véhicule. Les trous 190' d'insertion du levier sont positionnés en conséquence pour cela.

Dans cette variante de réalisation, pour faciliter le réglage en position angulaire de la douille de blocage 100' par rapport à la bague de réglage 200', il est prévu plusieurs trous 190' radiaux écartés angulairement autour de l'axe principal A1, ce qui permet d'engager le levier dans l'un des trous puis dans l'autre afin de manœuvrer le dispositif dans un espace restreint et peu accessible.

## Revendications

1. Dispositif de réglage (10) de la raideur d'une suspension d'un véhicule automobile, comportant :
- une douille de blocage (100) qui délimite une rainure hélicoïdale (110) de réception d'une extrémité (21) d'un ressort (20) de ladite suspension, et
- une bague de réglage (200) montée mobile en rotation par rapport à la douille de blocage (100) autour d'un axe principal (A1),
**caractérisé en ce que** la bague de réglage (200) comporte un doigt (220) qui débouche dans la rainure hélicoïdale (110) et qui est adapté à former une butée pour l'extrémité (21) dudit ressort (20), et
**en ce qu'**il est prévu des moyens de verrouillage (290) de la mobilité en rotation de la bague de réglage (200) par rapport à la douille de blocage (100).

2. Dispositif de réglage (10) selon la revendication précédente, dans lequel la bague de réglage (200) comporte un plateau (210) sur lequel repose une face d'appui (103) de la douille de blocage (100) et dans lequel le doigt (220) s'élève à partir du plateau (210).

3. Dispositif de réglage (10) selon la revendication précédente, dans lequel la rainure hélicoïdale (110) présente, sur une partie au moins de sa longueur, une fente (120) qui débouche sur ladite face d'appui (103) et qui est traversée par le doigt (220).

4. Dispositif de réglage (10) selon l'une des revendications précédentes, dans lequel les moyens de verrouillage (290) sont adaptés à verrouiller la bague de réglage (200) dans un nombre fini de positions angulaires par rapport à la douille de blocage (100), ledit nombre fini étant préférentiellement compris entre deux et quatre, bornes incluses.

5. Dispositif de réglage (10) selon l'une des revendications précédentes, dans lequel il est prévu dans la douille de blocage (100) au moins un trou (190) d'insertion adapté à recevoir un levier de manoeuvre de la bague de réglage (200) par rapport à la douille de blocage (100).

6. Dispositif de réglage (10) selon l'une des revendications précédentes, dans lequel la bague de réglage (200) comporte un plateau (210) sur lequel repose une face d'appui (103) de la douille de blocage (100) et dans lequel les moyens de verrouillage (290) sont formés par une excroissance qui fait saillie dudit plateau (210) ou respectivement de ladite face d'appui (103) et qui est adaptée à s'engager dans l'une ou l'autre de plusieurs cavités (180) située en creux dans ladite face d'appui (103) ou respectivement dans ledit plateau (210).

7. Dispositif de réglage (10) selon l'une des revendications 1 à 6, dans lequel la bague de réglage (200) présente une face intérieure (250) qui est taraudée et adaptée à être vissée sur un vérin (30).

8. Dispositif de réglage (10) selon l'une des revendications 1 à 6, dans lequel la bague de réglage (200) est montée coulissante sur un vérin (30) et dans lequel il est prévu un écrou vissé sur le vérin (30), à l'opposé du ressort (20) par rapport à la bague de réglage (200).

9. Dispositif de réglage (10) selon l'une des deux revendications précédentes, dans lequel il est prévu un contre-écrou (300) qui est adapté à être vissé sur le vérin (30), à l'opposé du ressort (20) par rapport à la bague de réglage (200).

10. Système de suspension et d'amortissement d'un véhicule automobile, comportant :
- un vérin (30) qui comprend un cylindre, un piston et une tige de vérin qui est reliée au piston et qui fait saillie hors du cylindre,
- un ressort (20) enfilé sur le vérin (30), et
- un dispositif de réglage (10) conforme à l'une des revendications précédentes, placé à une extrémité dudit ressort (20).

## Patentansprüche

1. Vorrichtung zur Einstellung (10) der Steifigkeit einer Aufhängung eines Kraftfahrzeugs, welche umfasst:
- eine Blockierhülse (100), die eine spiralförmige Nut (110) zur Aufnahme eines Endes (21) einer Feder (20) der Aufhängung begrenzt, und
- einen Einstellring (200), der bezüglich der Blockierhülse (100) drehbeweglich um eine Hauptachse (A1) angebracht ist,
**dadurch gekennzeichnet, dass** der Einstellring (200) einen Finger (220) umfasst, der in die spiralförmige Nut (110) hineinragt und der dazu eingerichtet ist, einen Anschlag für das Ende (21) der Feder (20) zu bilden, und
dadurch, dass Mittel zur Verriegelung (290) der Drehbeweglichkeit des Einstellringes (200) bezüglich der Blockierhülse (100) vorgesehen sind.

2. Vorrichtung zur Einstellung (10) nach dem vorhergehenden Anspruch, wobei der Einstellring (200) ein Plateau (210) umfasst, auf dem eine Anlageseite (103) der Blockierhülse (100) ruht, und wobei sich der Finger (220) von dem Plateau (210) aus erhebt.

3. Vorrichtung zur Einstellung (10) nach dem vorhergehenden Anspruch, wobei die spiralförmige Nut (110) wenigstens auf einem Teil ihrer Länge einen Schlitz (120) aufweist, der auf der Anlageseite (103) mündet und der von dem Finger (220) durchquert wird.

4. Vorrichtung zur Einstellung (10) nach einem der vorhergehenden Ansprüche, wobei die Verriegelungsmittel (290) dazu eingerichtet sind, den Einstellring (200) in einer endlichen Anzahl von Winkelpositionen bezüglich der Blockierhülse (100) zu verriegeln, wobei diese endliche Anzahl vorzugsweise zwischen zwei und vier liegt, einschließlich der Randwerte.

5. Vorrichtung zur Einstellung (10) nach einem der vorhergehenden Ansprüche, wobei in der Blockierhülse (100) mindestens ein Einsetzloch (190) vorgesehen ist, das dazu eingerichtet ist, einen Hebel zur Betätigung des Einstellringes (200) bezüglich der Blockierhülse (100) aufzunehmen.

6. Vorrichtung zur Einstellung (10) nach einem der vorhergehenden Ansprüche, wobei der Einstellring (200) ein Plateau (210) umfasst, auf dem eine Anlageseite (103) der Blockierhülse (100) ruht, und wobei die Verriegelungsmittel (290) von einem Vorsprung gebildet werden, der von dem Plateau (210) oder von der Anlageseite (103) vorsteht und der dazu eingerichtet ist, in die eine oder andere von mehreren Mulden (180) einzugreifen, die sich als Vertiefungen in der Anlageseite (103) bzw. im Plateau (210) befinden.

7. Vorrichtung zur Einstellung (10) nach einem der Ansprüche 1 bis 6, wobei der Einstellring (200) eine Innenseite (250) aufweist, die mit einem Innengewinde versehen ist und dazu eingerichtet ist, auf einen Stellantrieb (30) aufgeschraubt zu werden.

8. Vorrichtung zur Einstellung (10) nach einem der Ansprüche 1 bis 6, wobei der Einstellring (200) gleitend auf einem Stellantrieb (30) angebracht ist und wobei eine Mutter vorgesehen ist, die gegenüber der Feder (20), bezogen auf den Einstellring (200), auf den Stellantrieb (30) aufgeschraubt ist.

9. Vorrichtung zur Einstellung (10) nach einem der vorhergehenden Ansprüche, wobei eine Gegenmutter (300) vorgesehen ist, die dazu eingerichtet ist, gegenüber der Feder (20), bezogen auf den Einstellring (200), auf den Stellantrieb (30) aufgeschraubt zu werden.

10. Aufhängungs- und Dämpfungssystem eines Kraftfahrzeugs, welches umfasst:
- einen Stellantrieb (30), der einen Zylinder, einen Kolben und eine Kolbenstange, die mit dem Kolben verbunden ist und die aus dem Zylinder herausragt, umfasst,
- eine Feder (20), die auf den Stellantrieb (30) aufgesteckt ist, und
- eine Vorrichtung zur Einstellung (10) gemäß einem der vorhergehenden Ansprüche, die an einem Ende der Feder (20) angeordnet ist.

## Claims

1. Adjusting device (10) for adjusting the stiffness of an automotive vehicle suspension, comprising:
- a blocking sleeve (100) which delimits a helical groove (110) for accepting one end (21) of a spring (20) of said suspension, and
- an adjusting ring (200) mounted with the ability to rotate with respect to the blocking sleeve (100) about a main axis (A1),
**characterized in that** the adjusting ring (200) comprises a finger (220) which emerges into the helical groove (110) and which is able to form an end-stop for the end (21) of said spring (20), and
**in that** locking means (290) are provided that block the rotational mobility of the adjusting ring (200) relative to the blocking sleeve (100).

2. Adjusting device (10) according to the preceding claim, wherein the adjusting ring (200) comprises a flange (210) on which a bearing face (103) of the blocking sleeve (100) bears and wherein the finger (220) projects upwardly from the flange (210).

3. Adjusting device (10) according to the preceding claim, wherein the helical groove (110) has, over at least part of its length, a slot (120) which opens onto said bearing face (103) and through which the finger (220) passes.

4. Adjusting device (10) according to one of the preceding claims, wherein the locking means (290) are designed to lock the adjusting ring (200) in a finite number of angular positions with respect to the blocking sleeve (100), said finite number preferentially being comprised between two and four, endpoints included.

5. Adjusting device (10) according to one of the preceding claims, wherein at least one insertion hole (190) is provided in the blocking sleeve (100), the hole being designed to accept a lever for manoeuvring the adjusting ring (200) relative to the blocking sleeve (100).

6. Adjusting device (10) according to one of the preceding claims, wherein the adjusting ring (200) comprises a flange (210) on which a bearing face (103) of the blocking sleeve (100) rests and wherein the locking means (290) are formed by a protrusion that projects from said flange (210) or, respectively, from said bearing face (103) and that is able to engage in one or another of a number of cavities (180) recessed into said bearing face (103) or, respectively, into said flange (210).

7. Adjusting device (10) according to one of Claims 1 to 6, wherein the adjusting ring (200) has an interior face (250) which is tapped and designed to be screwed onto a damper (30).

8. Adjusting device (10) according to one of Claims 1 to 6, wherein the adjusting ring (200) is slidably mounted on a damper (30) and wherein there is provided a nut which is screwed onto the damper (30) on the opposite side of the adjusting ring (200) from the spring (20).

9. Adjusting device (10) according to one of the preceding two claims, wherein there is provided a lock-nut (300) which is designed to be screwed onto the damper (30) on the opposite side of the adjusting ring (200) from the spring (20).

10. Suspension and shock absorber system for an automotive vehicle, comprising:
- a damper (30) which comprises a cylinder, a piston and a piston rod which is connected to the piston and which projects out of the cylinder,
- a spring (20) passed over the damper (30), and
- an adjusting device (10) according to one of the preceding claims, placed at one end of said spring (20).
